# EUROPEAN PATENT APPLICATION

(11) **EP 4 467 276 A1**
(43) Date of publication of application: **27.11.2024**
(21) Application number: 24755172.4
(22) Date of filing: 04.03.2024
(51) Int. Cl.: B23K 26/21, B23K 26/03, B23K 37/04, B23K 26/062, H01M 50/566, B23K 101/36

(54) **LASER WELDING APPARATUS FOR ELECTRODE TAB AND ELECTRODE LEAD, AND WELDING METHOD USING SAME**

(30) Priority: 09.03.2023 KR 20230030979; 19.02.2024 KR 20240023841
(71) Applicant: LG Energy Solution, Ltd., Seoul 07335 (KR)
(72) Inventor: CHOI, Jae Ho, Daejeon 34122 (KR)
(74) Representative: Goddar, Heinz J.
(86) International application number: PCT/KR2024/002755
(87) International publication number: WO 2024/186086

(57) **Abstract**

Disclosed are a laser welding apparatus including an upper jig located above an overlap portion of a first member and a second member, a laser radiator configured to radiate a laser beam toward a part or an entirety of the overlap portion, an image capturing member configured to capture an image of the interior of the upper jig, a calculation unit configured to acquire deposition level information of spatter generated in the upper jig during welding from the image of the interior of the upper jig and to determine a welding sequence based on the deposition level information, and a controller configured to receive a signal from the calculation unit and to control the operation of the laser radiator and a welding method using the same, wherein deposition of spatter during a welding process may be minimized, whereby weld quality may be improved.

## Description

### [Technical Field]

This application claims the benefit of priority to Korean Patent Application No. 2023-0030979 filed on March 9, 2023 and Korean Patent Application No. 2024-0023841 filed on February 19, 2024, the disclosures of which are incorporated herein by reference in their entireties.

The present invention relates to an apparatus for laser welding between an electrode tab and an electrode lead and a welding method using the same. More particularly, the present invention relates to an apparatus for laser welding between an electrode tab and an electrode lead capable of minimizing welding defects caused by spatter deposited on a jig for welding during a laser welding process for coupling the electrode tab and the electrode lead to each other and extending the replacement or cleaning cycle of the spatter and a welding method using the same.

### [Background Art]

As the development rate of lithium secondary batteries, which have high energy density and are classified as green energy, is increasing, the use of lithium secondary batteries is increasing as an energy source for devices requiring high capacity and high output, such as an electric vehicle, a hybrid electric vehicle, and a plug-in hybrid electric vehicle.

Lithium secondary batteries may be classified into a prismatic secondary battery having an electrode assembly mounted in a metal can, a cylindrical secondary battery having an electrode assembly mounted in a metal can, and a pouch-shaped secondary battery having an electrode assembly mounted in a battery case made of an aluminum laminate sheet.

The pouch-shaped secondary battery has the advantages of easy shape transformation and high energy density, and is assembled by receiving an electrode assembly in a sheathing member, injecting an electrolytic solution into the sheathing member, and sealing the sheathing member by thermal fusion.

In general, the electrode assembly received in the pouch-shaped secondary battery includes a stacked type electrode assembly manufactured by stacking a plurality of unit cells, each of which is configured to have a structure in which a rectangular positive electrode and a rectangular negative electrode are stacked in the state in which a separator is interposed between the positive electrode and the negative electrode, a stacked and folded type electrode assembly manufactured by disposing unit cells on a separation film and winding the separation film, and a jelly-roll type electrode assembly manufactured by winding a long sheet type positive electrode and a long sheet type negative electrode in the state in which separator sheets are disposed on opposite surfaces of any one of the positive electrode and the negative electrode.

The electrode assembly received in the pouch-shaped secondary battery includes a positive electrode tab and a negative electrode tab attached to or extending from an electrode plate, wherein the positive electrode tab is coupled to a positive electrode lead and the negative electrode tab is coupled to a negative electrode lead. The positive electrode lead and the negative electrode lead are disposed at the outer periphery of the pouch-shaped battery case of the pouch-shaped secondary battery so as to protrude outward.

Meanwhile, laser welding is used to couple the positive electrode tab and the positive electrode lead to each other and to couple the negative electrode tab and the negative electrode lead to each other. Specifically, the electrode tab and the electrode lead are disposed so as to overlap each other, an upper jig is disposed above an overlap portion thereof, and a laser is radiated in the state in which the overlap portion is pressed by the upper jig to weld the electrode tab and the electrode lead to each other.

The interior of the upper jig may be empty, and spatter generated during laser welding is deposited on an inner surface of the upper jig.

In addition, since laser welding has a fixed welding sequence, the later the welding sequence, the more spatter is generated due to preheating of a base material.

Therefore, spatter deposited on the upper jig more rapidly grows in the part of the inner surface of the upper jig that is closer to a weld portion formed later. If the growth rate of spatter in some region is fast, as described above, the laser beam radiated to the part is blocked by the spatter, resulting in welding defects, and the replacement cycle or the cleaning cycle of the spatter may be shortened, resulting in a decrease in process efficiency.

Patent Document 1 discloses a tight contact jig for laser welding of a secondary battery tab including an upper tight contact jig including an annular spray unit capable of performing face spraying to suppress deterioration of weld quality due to reaction with hydrogen or oxygen in the air during laser welding to form an electrode terminal and to suppress the generation of short circuit due to spatter deposition during welding and a welding method.

Patent Document 1 may prevent the occurrence of short circuit due to spatter deposition, but it is necessary to use an upper tight contact jig including an annular spray unit capable of performing face spraying, whereby there is a problem that a new welding apparatus needs to be provided.

### (Prior Art Document)

(Patent Document 1) Korean Patent Application Publication No. 2021-0046096 (2021.05.03)

### [Disclosure]

### [Technical Problem]

The present invention has been made in view of the above problems, and it is an object of the present invention to provide an apparatus for laser welding between an electrode tab and an electrode lead capable of preventing welding defects while using a conventional upper jig without change and a welding method using the same.

It is an object of the present invention to provide an apparatus for laser welding between an electrode tab and an electrode lead capable of extending the replacement cycle or the cleaning cycle of spatter and a welding method using the same.

### [Technical Solution]

A laser welding apparatus according to the present invention to accomplish the above objects includes an upper jig located above an overlap portion of a first member and a second member; a laser radiator configured to radiate a laser beam toward a part or an entirety of the overlap portion; an image capturing member configured to capture an image of the interior of the upper jig; a calculation unit configured to acquire deposition level information of spatter generated in the upper jig during welding from the image of the interior of the upper jig and to determine the welding sequence based on the deposition level information; and a controller configured to receive a signal from the calculation unit and to control the operation of the laser radiator.

Also, in the laser welding apparatus according to the present invention, the upper jig may be formed in the shape of a frame having an empty space portion provided therein, and the frame may be polygonal, oval, or circular in shape.

Also, in the laser welding apparatus according to the present invention, the image capturing member may be a scanner or a vision camera.

Also, in the laser welding apparatus according to the present invention, the first member may be an electrode tab, and the second member may be an electrode lead.

In addition, a laser welding method according to the present invention, which is a laser welding method of welding a first member and a second member to each other using an upper jig and a laser radiator, includes a first step of capturing an image of the upper jig, a second step of acquiring deposition level information of spatter generated in the upper jig during welding from the image captured in the first step, a third step of determining the welding sequence based on the deposition level information of the spatter, and a fourth step of radiating a laser beam in accordance with the welding sequence to perform welding such that a plurality of weld portions is formed.

Also, the laser welding method according to the present invention may further include overlapping a part of the first member and a part of the second member and locating the upper jig above an overlap portion before the fourth step.

Also, in the laser welding method according to the present invention, the upper jig may be formed in the shape of a frame having an empty space portion provided therein.

Also, in the laser welding method according to the present invention, the frame may be polygonal, oval, or circular in shape.

Also, in the laser welding method according to the present invention, the first step may include capturing an image of the interior of the upper jig using a scanner or a camera disposed above the upper jig.

Also, in the laser welding method according to the present invention, the camera may be a vision camera.

Also, in the laser welding method according to the present invention, the deposition level information of the spatter in the second step may be at least one of the area, the shape, and the position of the spatter.

Also, in the laser welding method according to the present invention, the welding sequence in the third step may be set such that a laser beam is preferentially radiated to a point having a smaller distance between a point to which the laser beam is to be radiated and the deposited spatter to form a weld portion.

Also, in the laser welding method according to the present invention, the welding sequence in the third step may be set such that, when the spatter is located in an overlapping state within a certain radius from a point to which a laser beam is to be radiated, the laser beam is preferentially radiated to a point having a larger overlap area of the spatter.

Also, the laser welding method according to the present invention may further include locating the first member and the second member above a lower jig before the fourth step.

Also, in the laser welding method according to the present invention, the first member may be an electrode tab, and the second member may be an electrode lead.

### [Advantageous Effects]

As is apparent from the above description, in an apparatus for laser welding between an electrode tab and an electrode lead according to the present invention and a welding method using the same, it is possible to minimize unevenness in the growth rate of spatter deposited on an upper jig during a laser welding process, whereby it is possible to extend the replacement cycle of the upper jig.

Furthermore, in the apparatus for laser welding between the electrode tab and the electrode lead according to the present invention and the welding method using the same, it is possible to prevent excessive growth of spatter on a specific part, whereby it is possible to minimize the problem that the path of a laser beam is obstructed during the welding process, which contributes to improvement in weld quality.

### [Description of Drawings]

FIG. 1 is a conceptual view showing an apparatus for laser welding between an electrode tab and an electrode lead according to the present invention.
FIG. 2 is a plan view showing the state in which an upper jig is disposed above an overlap portion of an electrode tab and an electrode lead in accordance with the present invention.
FIG. 3 is a plan view showing the state in which spatter has grown on the upper jig of FIG. 2.
FIG. 4 is a flowchart of a welding method using the laser welding apparatus according to the present invention.
FIG. 5 is a first schematic view illustrating the entire position to which a laser beam is to be radiated and the position to which the laser beam is preferentially radiated.
FIG. 6 is a second schematic view illustrating the entire position to which a laser beam is to be radiated and the position to which the laser beam is preferentially radiated.
FIG. 7 is a view illustrating the sequence in which a laser beam is moved in accordance with a first embodiment.
FIG. 8 is a view illustrating the sequence in which a laser beam is moved in accordance with a second embodiment.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Although an electrode tab and an electrode lead are described herein by way of example as objects to be welded, the present invention is not limited thereto as long as laser welding is possible.

Embodiments of the present invention will be described in detail with reference to the accompanying drawings.

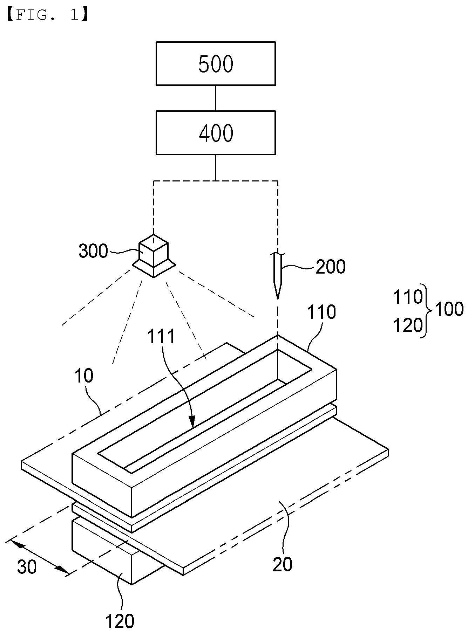

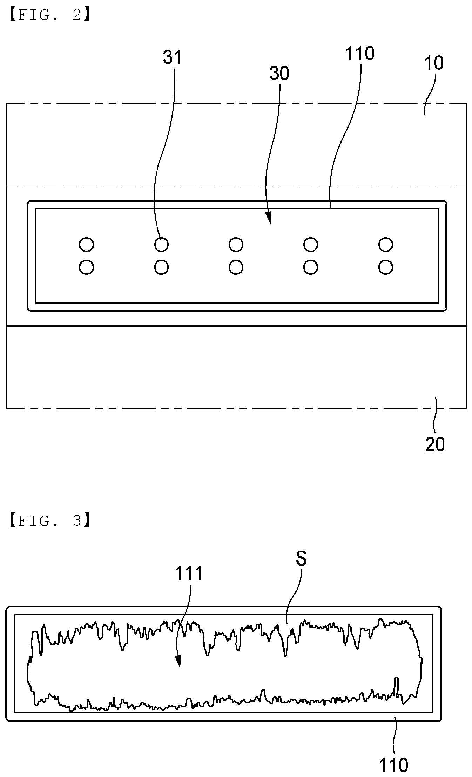

FIG. 1 is a conceptual view showing an apparatus for laser welding between an electrode tab and an electrode lead according to the present invention, FIG. 2 is a plan view showing the state in which an upper jig is disposed above an overlap portion of an electrode tab and an electrode lead in accordance with the present invention, and FIG. 3 is a plan view showing the state in which spatter has grown on the upper jig of FIG. 2.

Referring to FIGs. 1 to 3, the laser welding apparatus according to the present invention may include a jig 100 configured to allow objects to be welded to be seated thereon or to support the objects to be welded, a laser radiator 200, an image capturing member 300, a calculation unit 400, and a controller 500.

First, the jig 100 may include an upper jig 110 and a lower jig 120, wherein the upper jig 110 is located above parts to be welded of the objects to be welded, i.e., an overlap portion 30 of the objects to be welded at which the objects to be welded overlap each other, to press the objects to be welded, and the lower jig 120 is located under the overlap portion. The lower jig 120 may be omitted as needed.

Specifically, the upper jig 110 has the shape of a frame having an empty space portion 111 defined therein. In detail, when the upper jig 110 is viewed from above, the frame may have a polygonal shape, including a quadrangular shape, a hexagonal shape, and an octagonal shape, a shape that is curved in full width and straight in full length, an oval shape, or a circular shape.

When the upper jig 110 is polygonal, a corner at which two sides are joined to each other may be angled or rounded.

The laser welding apparatus according to the present invention may be used to manufacture an electrode assembly included in a pouch-shaped battery cell, wherein the objects to be welded may be an electrode tab corresponding to a first member 10 and an electrode lead corresponding to a second member 20.

Of course, it is obvious that, when the first member is an electrode lead, the second member is an electrode tab.

A part of an end of the first member 10 and a part of an end of the second member 20 are disposed so as to overlap each other to form an overlap portion 30, and the first member 10 and the second member 20 are connected to each other using a spot welding method by radiating a laser beam on the top of the overlap portion 30 to form a weld portion 31.

Although FIG. 2 shows the form in which ten weld portions 31 are arranged in two rows, this is only an example, and the number of weld portions 31 may be optionally adjusted based on the width and length of each of the first member 10 and the second member 20 and the area of the overlap portion 30.

In addition, the weld portion 31 may have various shapes, such as a dot, a line such as a solid line or a dotted line, a circle, an oval, and a polygon.

The laser radiator 200, which is operatively connected to a laser generator (not shown), is located above the overlap portion 30 to radiate a laser beam toward the overlap portion 30. More specifically, the laser radiator 200 radiates a laser beam toward a part or the entirety of the overlap portion 30 through the space portion 111 formed in the upper jig 110 to connect and fix the first member 10 and the second member 20 to each other at the overlap portion 30.

Since the laser welding apparatus using the laser beam, i.e., the laser generator and the laser radiator, is known in the art, a detailed description thereof will be omitted.

Meanwhile, during a laser welding process, spatter S (see FIG. 3) is inevitably generated, and the spatter S may be deposited on an inner surface of the upper jig 110.

The deposited spatter S becomes an obstacle in a path of the laser beam, which may cause poor coupling between the first member 10 and the second member 20.

In other words, as shown in FIG. 3, the spatter S deposited on the inner surface of the upper jig 110 may grow and fill the space portion 111, and the laser beam may be blocked by the spatter S.

The image capturing member 300 is configured to capture an image of the interior of the upper jig 110. The image capturing member 300 is configured to acquire information that the spatter S generated during the laser welding process described above has been deposited on a frame of the upper jig 110 as an image. Although the type of the image capturing member 300 is not particularly restricted as long as it is possible to acquire an image and obtain information, the image capturing member may be a scanner or a camera, and more specifically, the image capturing member may be a vision camera.

Here, the image of the interior of the upper jig 110 may be captured in real time during the welding process or may be captured after the welding process of the pair of objects to be welded is finished.

Subsequently, the calculation unit 400 analyzes the deposition level information of the spatter S acquired by the image capturing member 300 to determine the welding sequence, i.e., the path of movement of the laser beam, which will be described in detail later.

Meanwhile, the controller 500 receives a signal determined by the calculation unit 400 and controls the operation of the laser radiator. In other words, the controller determines whether the laser radiator is to radiate a laser beam and performs control such that the laser beam is moved along the predetermined movement path. Of course, it is obvious that the operation of the image capturing member 300 may also be controlled.

Next, a welding method using the laser welding apparatus will be described.

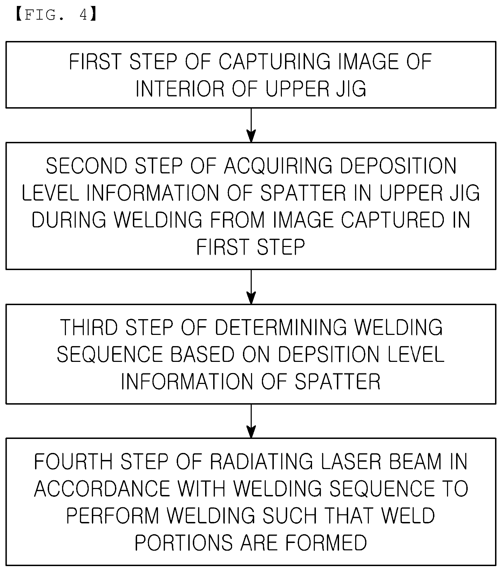

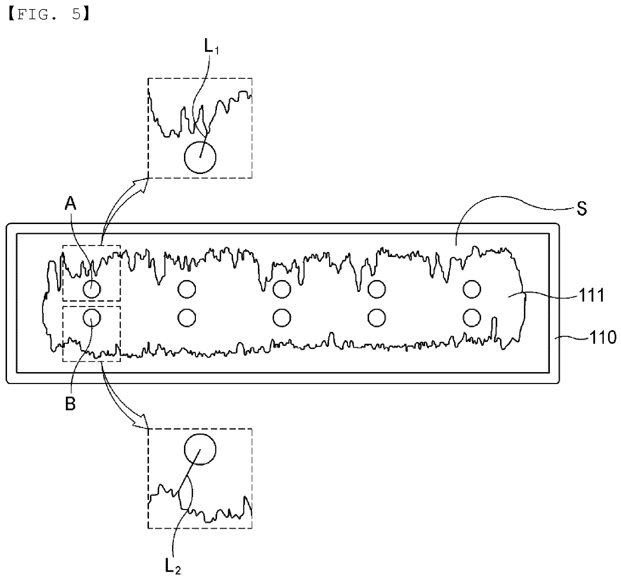

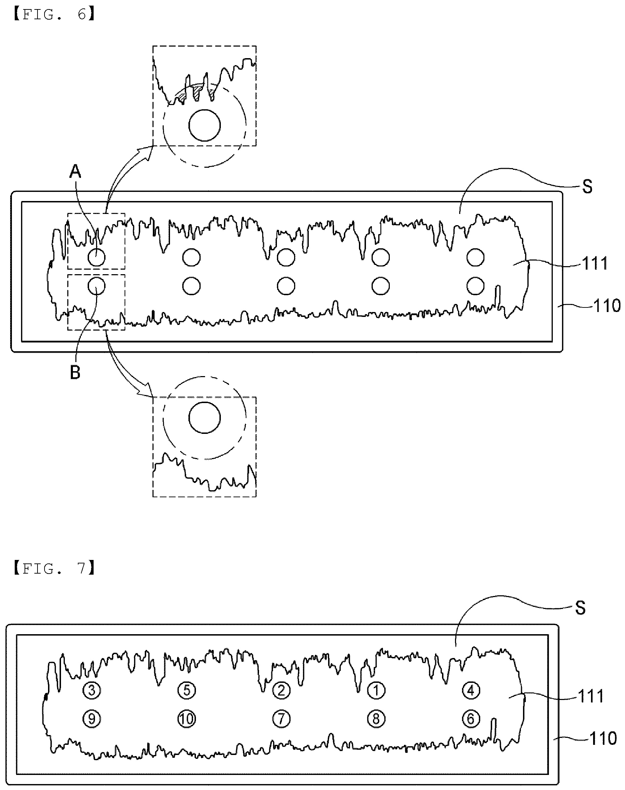

FIG. 4 is a flowchart of a welding method using the laser welding apparatus according to the present invention, FIG. 5 is a first schematic view illustrating the entire position to which a laser beam is to be radiated and the position to which the laser beam is preferentially radiated, and FIG. 6 is a second schematic view illustrating the entire position to which a laser beam is to be radiated and the position to which the laser beam is preferentially radiated.

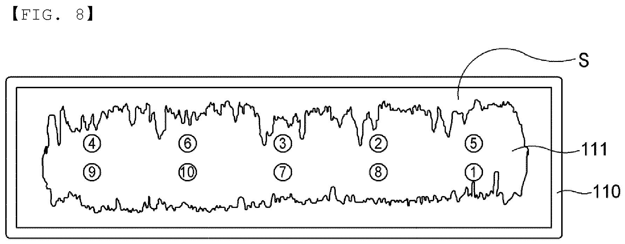

In addition, FIG. 7 is a view illustrating the sequence in which a laser beam is moved in accordance with a first embodiment, and FIG. 8 is a view illustrating the sequence in which a laser beam is moved in accordance with a second embodiment.

Referring first to FIG. 4, the welding method according to the present invention may include a first step of capturing an image of the space portion of the upper jig, a second step of acquiring deposition level information of spatter S generated in the inner space portion of the upper jig during welding from the image captured in the first step, a third step of determining a welding sequence based on the deposition level information of the spatter S, and a fourth step of radiating a laser beam in accordance with the welding sequence to perform welding such that a plurality of weld portions is formed.

First, the first step is a step of capturing an image of the inner space portion of the upper jig using a scanner or camera.

Here, the image of the upper jig is captured in the state in which a part of a first member and a part of a second member, which are objects to be welded, overlap each other and the upper jig is located above an overlap portion of the first member and the second member, or the image of the upper jig is captured before the upper jig is located above the overlap portion, to acquire an image of the deposited spatter S.

Of course, it is preferable to obtain an image of the upper jig in an unused state, i.e., an image of the upper jig to which no spatter S has been deposited.

The second step of obtaining the deposition level information of the spatter S from the captured image and the third step of determining the welding sequence are performed by the calculation unit. Here, the deposition level information of the spatter S is at least one of the area, shape, and position of the spatter S when the upper jig is viewed from above or below.

Referring to FIG. 5, when a laser beam is radiated to form ten weld portions, it is preferable to sequentially radiate the laser beam based on the shortest straight line distance between each weld portion and the spatter S. For example, since a first straight line distance L1, which is the shortest straight line distance between point A and the spatter S, is less than a second straight line distance L2, which is the shortest straight line distance between point B and the spatter S, point A is welded before welding of point B.

Here, when the weld portions have the same shape and area, the straight line distance may mean the shortest distance between the center of a weld point to which the laser beam is radiated and the outermost side of the spatter S.

Of course, when the weld portions have different shapes and areas, the straight line distance may be defined as the shortest distance between the edge of the weld point to which the laser beam is radiated and the outermost side of the spatter S.

In addition, as shown in FIG. 6, when a laser beam is radiated in order to form ten weld portions, it is preferable that, when the spatter S is located in an overlapping state within a certain radius of each weld portion, the laser beam be sequentially radiated as the overlapping area of the spatter increases.

For example, since a certain part of the spatter S is located in an overlapping state within a certain radius of point A while no spatter S is present within the same radius of point B, point A is welded before welding of point B.

As described above, since the deposited spatter S blocks the path of the laser beam, causing poor coupling, and the deposited spatter S grows unevenly, it is necessary to prevent excessive deposition of the spatter S at a specific position.

Therefore, as shown in FIG. 7, the laser beam is preferentially radiated toward a weld portion having the shortest straight line distance from the spatter S. Specifically, according to the information of the spatter S deposited in the inner space portion 111 of the frame of the upper jig 110, the laser beam is radiated to the ten weld portions in the order of third, fifth, second, first, fourth, sixth, eighth, seventh, tenth, and ninth weld portions, clockwise from the top left.

Referring to FIG. 8, which shows another example, the laser beam is preferably radiated to the ten weld portions in the order of the fourth, sixth, third, second, fifth, first, eighth, seventh, tenth, and ninth weld portions, clockwise from the top left.

Of course, when the laser beam is radiated in the preset order and welding is completed, the first step, in which the image of the interior of the upper jig is captured, to the fourth step are performed again.

Meanwhile, when the deposition level information of the spatter S is obtained in real time during welding, the welding may be performed after the welding sequence is determined in real time.

This is because, for example, even if the welding order of the weld portions is determined before welding, the deposition level of the spatter S in the vicinity of a corresponding weld portion may change due to uneven deposition of the spatter S.

Those skilled in the art to which the present invention pertains will appreciate that various applications and modifications are possible within the category of the present invention based on the above description.

### (Description of Reference Symbols)

10: First member
20: Second member
30: Overlap portion
31: Weld portion
100: Jig
110: Upper jig
111: Space portion
120: Lower jig
200: Laser radiator
300: Image capturing member
400: Calculation unit
500: Controller
S: Spatter
L1: First straight line distance
L2: Second straight line distance

## Claims

1. A laser welding apparatus comprising:
an upper jig located above an overlap portion of a first member and a second member;
a laser radiator configured to radiate a laser beam toward a part or an entirety of the overlap portion;
an image capturing member configured to capture an image of an interior of the upper jig;
a calculation unit configured to acquire deposition level information of spatter generated in the upper jig during welding from the image of the interior of the upper jig and to determine a welding sequence based on the deposition level information; and
a controller configured to receive a signal from the calculation unit and to control an operation of the laser radiator.

2. The laser welding apparatus according to claim 1, wherein the upper jig is formed in a shape of a frame having an empty space portion provided therein, and the frame is polygonal, oval, or circular in shape.

3. The laser welding apparatus according to claim 1, wherein the image capturing member is a scanner or a vision camera.

4. The laser welding apparatus according to claim 1, wherein the first member is an electrode tab, and the second member is an electrode lead.

5. A laser welding method of welding a first member and a second member to each other using an upper jig and a laser radiator, the laser welding method comprising:
a first step of capturing an image of the upper jig;
a second step of acquiring deposition level information of spatter generated in the upper jig during welding from the image captured in the first step;
a third step of determining a welding sequence based on the deposition level information of the spatter; and
a fourth step of radiating a laser beam in accordance with the welding sequence to perform welding such that a plurality of weld portions is formed.

6. The laser welding method according to claim 5, further comprising overlapping a part of the first member and a part of the second member and locating the upper jig above an overlap portion before the fourth step.

7. The laser welding method according to claim 6, wherein the upper jig is formed in a shape of a frame having an empty space portion provided therein.

8. The laser welding method according to claim 7, wherein the frame is polygonal, oval, or circular in shape.

9. The laser welding method according to claim 7, wherein the first step comprises capturing an image of an interior of the upper jig using a scanner or a camera disposed above the upper jig.

10. The laser welding method according to claim 9, wherein the camera is a vision camera.

11. The laser welding method according to claim 9, wherein the deposition level information of the spatter in the second step is at least one of an area, a shape, and a position of the spatter.

12. The laser welding method according to claim 11, wherein the welding sequence in the third step is set such that a laser beam is preferentially radiated to a point having a smaller distance between a point to which the laser beam is to be radiated and the deposited spatter to form a weld portion.

13. The laser welding method according to claim 11, wherein the welding sequence in the third step is set such that, when the spatter is located in an overlapping state within a certain radius from a point to which a laser beam is to be radiated, the laser beam is preferentially radiated to a point having a larger overlap area of the spatter.

14. The laser welding method according to claim 6, further comprising locating the first member and the second member above a lower jig before the fourth step.

15. The laser welding method according to claim 5, wherein the first member is an electrode tab, and the second member is an electrode lead.
